# DEMANDE DE BREVET EUROPEEN

(11) **EP 2 837 976 A2**
(43) Date de publication de la demande: **18.02.2015**
(21) Numéro de dépôt: 14177093.3
(22) Date de dépôt: 15.07.2014
(51) Int. Cl.: G04B 3/04

(54) **Procédé de fabrication d une pièce mécanique**

(30) Priorité: 16.08.2013 CH 14012013
(71) Demandeur: Valiance SA, 2504 Bienne (CH)
(72) Inventeur: Rognon, Thierry, 90800 Duc (FR)
(74) Mandataire: P&TS SA (AG, Ltd.)

(57) **Abrégé**

L'invention concerne un procédé de fabrication d'une pièce mécanique (1) comportant un substrat et un revêtement surmoulé (3). Le procédé comprend une étape de réaliser sur le substrat un relief (4) entouré d'au moins une zone en creux. Ce relief est recouvert par une couche de masquage. Ce substrat est ensuite placé dans un moule et/ou contre-moule, de manière à ce que la surface de cette couche entre en contact physique avec la surface intérieure du moule et/ou contre-moule. Un matériau synthétique, par exemple un élastomère est ensuite injecté dans le moule et/ou contre-moule de manière à recouvrir la zone en creux d'une couche injectée (3). L'étape suivante de ce procédé de fabrication comprend un démoulage de la pièce.

En particulier, ce procédé permet la réalisation de pièces d'horlogerie, de bijouterie, de lunetterie, ou d'instruments d'écriture par surmoulage.

## Description

### Domaine technique

La présente invention concerne un procédé de fabrication d'une pièce mécanique comportant un substrat et un revêtement en matériau synthétique injecté, en particulier d'une pièce d'horlogerie, de bijouterie, de lunette ou d'instrument d'écriture comportant un surmoulage.

### Etat de la technique

Le document EP2316299 décrit un procédé de production d'une pièce d'horlogerie ou de bijouterie par surmoulage. Ce procédé prévoit les étapes de recouvrir un relief par une couche d'un élastomère suivi par une opération d'abrasion d'une partie de cette couche afin de rendre le relief visible. Cependant, l'aspect final de la pièce est déterminé par une opération de finition qui doit être effectué en même temps sur les surfaces du relief et de l'élastomère.

Le document EP2363036 décrit un procédé de production d'une pièce par surmoulage. Ce procédé prévoit en outre un traitement de surface afin de générer des groupes actifs ainsi qu'une couche de revêtement comprenant une couche intermédiaire. Le relief peut être rendu visible par une opération d'abrasion d'une partie de ces couches de revêtement. Cependant, ce procédé limite les types de finition ainsi que les opérations de finition de la pièce à l'ensemble des surfaces du relief et de l'élastomère.

Le document EP2423763 décrit un procédé de fabrication d'une pièce d'horlogerie. Ce procédé prévoit la fabrication d'une pièce d'horlogerie métallique avec surmoulage en caoutchouc, comprenant une couche d'adhésion à base d'organosilane. Cependant, l'aspect final de cette pièce d'horlogerie n'est conféré que par l'aspect final du revêtement d'élastomère.

### Bref résumé de l'invention

Un but de la présente invention est de proposer un procédé de fabrication d'une pièce mécanique comportant un substrat et un revêtement en matériau synthétique injecté qui soit exempt des limitations des procédés connus.

Selon l'invention, ces buts sont atteints notamment au moyen d'un procédé de fabrication d'une pièce mécanique comportant un substrat et un revêtement d'un matériau synthétique injecté et qui comprend les étapes de:
- réaliser sur le substrat un relief qui est entouré d'au moins une zone en creux et qui est recouvert par une couche;
- placer le substrat dans un moule et/ou dans un contre-moule, de manière à ce que la surface de la couche entre en contact physique avec la surface intérieure du moule et/ou du contre-moule ;
- injecter le matériau synthétique dans le moule et/ou contre-moule de manière à recouvrir la zone en creux d'une couche de matériau synthétique ;
- démouler la pièce,
- de préférence, retirer la couche de masquage.

Cette solution présente notamment l'avantage par rapport à l'art antérieur d'offrir un plus large éventail d'options concernant l'aspect final de la pièce mécanique. En particulier, ce procédé de fabrication permet de réaliser des pièces d'horlogerie ou de bijouterie surmoulées dont la finition joue un rôle esthétique important. Par ailleurs, l'invention permet la réalisation de pièces dans lesquelles l'élément métallique est recouvert par un revêtement fonctionnel, par exemple un revêtement décoratif ou dur.

Selon un mode de réalisation, l'étape de préparation du substrat comprend une étape d'usinage du substrat suivie par une étape de masquage du relief par une couche.

Selon un mode de réalisation, l'étape d'injection de l'élastomère dans le moule et/ou dans le contre-moule est suivie par une opération de chauffage du matériau synthétique, par exemple de vulcanisation de l'élastomère. Dans cette réalisation, la couche de masquage est résistante à la température d'injection ou de vulcanisation.

Un autre but de la présente invention est de proposer un procédé de fabrication d'une pièce mécanique comportant un substrat et un revêtement d'élastomère permettant de rendre visible un relief du substrat.

Selon un mode de réalisation, le procédé comprend en outre l'étape de retirer, par exemple en la dissolvant, la couche de masquage. A cet effet, la couche de masquage peut être constituée d'un agent soluble.

Un autre but de la présente invention est de proposer un procédé de fabrication d'une pièce mécanique offrant une finition de la pièce obtenue grâce à la combinaison de divers types d'opérations de traitement sur le substrat et sur le matériau surmoulé.

Selon un mode de réalisation, l'étape de préparation du substrat comprend en outre au moins un traitement de surface. Ce traitement peut comprendre une étape de finition de type satinage, polissage, ciselage et/ou déposition de couche mince. L'étape de finition peut comprendre une ou plusieurs opérations de décoration.

Selon un mode de réalisation, l'étape d'injection de l'élastomère dans le moule et/ou contre-moule est précédée d'une étape d'application d'une couche d'un agent d'adhérisation sur une surface d'une zone en creux.

Selon un mode de réalisation, le substrat est réalisé dans un matériau choisi entre l'acier, le laiton, le titane, un métal précieux, le saphir ou la céramique.

Selon un mode de réalisation, le surmoulage est effectué au moyen d'un matériau synthétique injecté, de préférence un élastomère, par exemple du caoutchouc.

### Brève description des figures

Des exemples de mise en oeuvre de l'invention sont indiqués dans la description illustrée par les figures annexées dans lesquelles :
la figure 1 illustre une pièce mécanique réalisée par le procédé selon l'invention ;
la figure 2 illustre une vue en coupe de la pièce mécanique de la figure 1 ;
les figures 3a-3c illustrent des étapes de fabrication d'une pièce mécanique selon l'invention ;
les figures 4a-4d illustrent des étapes de fabrication d'une pièce mécanique selon un autre mode de réalisation.

### Exemple(s) de mode de réalisation de l'invention

La présente invention concerne un procédé de fabrication d'une pièce mécanique comportant un substrat et un revêtement surmoulé, en particulier d'une pièce d'horlogerie, de bijouterie, de lunetterie ou une partie d'un instrument d'écriture comportant un surmoulage.

Ce procédé offre un plus large éventail d'options de finition de la pièce mécanique, en permettant de rendre visible au moins un relief du substrat d'effectuer différents traitement de surface sur la portion visible du substrat et/ou sur le matériau synthétique surmoulé.

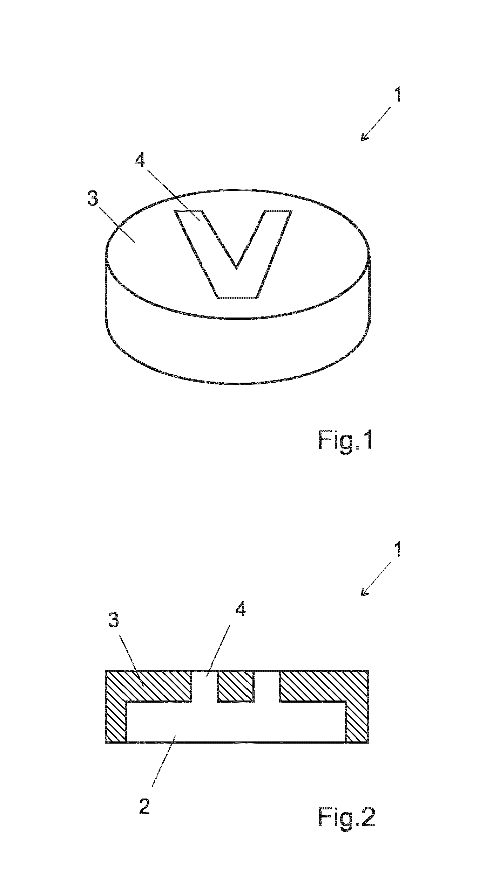

Les figures 1 et 2 illustrent une pièce mécanique 1 réalisée par le procédé selon l'invention. La pièce 1 comporte un substrat 2 et un revêtement 3 en matériau synthétique, par exemple en élastomère, muni d'une ouverture laissant apparaître une portion en relief 4 du substrat 2. La forme de la surface visible du relief 4 peut avoir des fins esthétiques et/ou fonctionnelles. Il peut s'agir par exemple d'un logo, d'une inscription, d'un signe, etc.

Le substrat 2 peut être réalisé dans un matériau choisi entre l'acier, le laiton, le titane, un métal précieux, le saphir ou la céramique.

Le matériau synthétique peut être un élastomère, par exemple un caoutchouc.

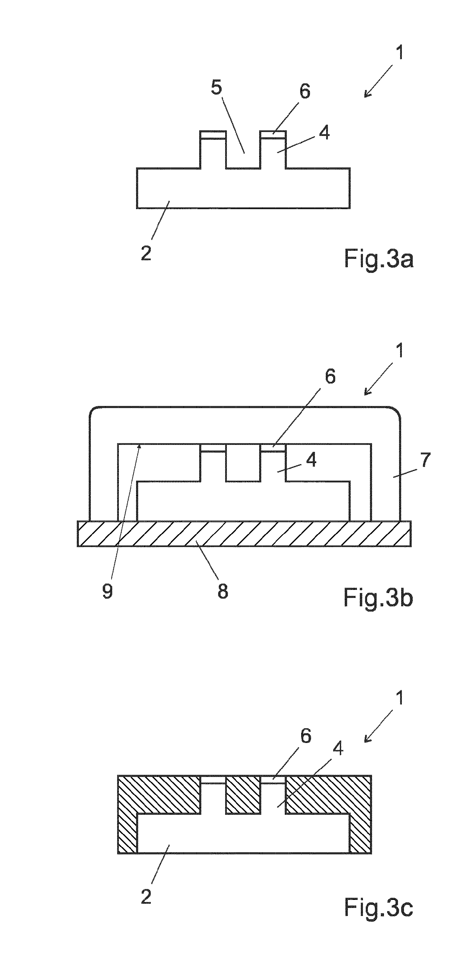

Les figures 3a-3c illustrent des étapes du procédé de fabrication d'une pièce mécanique 1.

Le procédé de fabrication de la pièce 1 comprend tout d'abord l'étape de réaliser un substrat 2 avec au moins un relief 4 (Figure 3a). Le relief 4 est entouré d'au moins une zone en creux 5. Il est possible de lui appliquer un revêtement de surface, par exemple dans un but décoratif ou protecteur. Il est possible de le sabler afin de le rendre plus poreux et de faciliter l'adhésion du revêtement surmoulé.

Une couche de masquage 6 est appliquée sur une portion du substrat qui ne doit pas être recouverte du revêtement surmoulé, par exemple sur la portion en relief 4.

Le relief 4 et la zone en creux 5 peuvent être réalisés par usinage du substrat 2 ou par moulage. La couche 6 peut être appliquée sur une surface du relief 4 après usinage. Dans une variante, la couche 6 est appliquée sur une plus large surface du substrat 2 avant l'usinage des portions en creux 5.

La fine couche de masquage 6 peut être déposée sous la forme d'une laque, d'un vernis ou d'un adhésif par exemple. Cette couche est avantageusement aussi fine que possible, son épaisseur étant par exemple inférieure à 0,1 mm.

Le procédé comporte ensuite une étape optionnelle non illustrée de dépôt d'une couche d'adhérisation, déposée à la fois sur le substrat 2 et sur le couche de masquage 6. La couche d'adhérisation permet de faciliter l'adhérence ultérieure du revêtement surmoulé sur le substrat. Elle peut être déposée par giclage, pulvérisation, ou par d'autres moyens.

Le procédé de fabrication de la pièce 1 comprend ensuite l'étape de placer le substrat 2 dans un dispositif de moulage 7, 8 tout en s'assurant que la surface de la couche 6 entre en contact physique avec la surface intérieure 9 de ce dispositif 7,8 (Figure 3b).

Le dispositif de moulage peut comprendre un moule 7 avec un contre-moule 8. Le substrat 2 peut être placé dans le moule 7 ou dans le contre-moule 8 de manière que la fine couche 6 entre en contact physique avec la surface intérieure 9 du moule 7 et/ou du contre-moule 8. La surface du moule ou du contre-moule en contact avec le substrat 4 ou avec la couche de masquage 6 est avantageusement déformable de manière à assurer qu'une pression soit exercée sur la couche de masquage 6, même si l'épaisseur du substrat 4 varie en raison des tolérances d'usinage.

Le procédé de fabrication de la pièce 1 comprend ensuite l'étape d'injecter un matériau synthétique, par exemple un élastomère, dans le dispositif de moulage 7, 8, de manière à recouvrir les portions de la pièce 4,6 qui ne sont pas en appui contre le moule, notamment la ou les zones en creux 5 d'une couche de matériau injecté 3. Le matériau peut être injecté dans le dispositif de moulage 7, 8 avant de refermer le moule, de manière à s'assurer que le matériau injecté pénètre partout dans le moule y compris dans d'éventuelles portions fermées entres les reliefs 4.

La couche de masquage 6 est réalisée dans un matériau résistant à la température d'injection.

Selon le type de matériau injecté, le procédé de fabrication de la pièce 1 peut comprend en outre une étape de vulcanisation. Pour cela, la couche 6 peut être constituée d'un matériel résistant à la vulcanisation.

Le procédé de fabrication de la pièce 1 comprend ensuite l'étape de démoulage de la pièce 1 (Figure 3c) après durcissement du matériau injecté.

Le procédé de fabrication de la pièce 1 peut comprendre en outre une étape de dissoudre la fine couche de masquage 6 de manière à rendre directement visible la surface du relief 4, comme représenté sur la figure 2. Pour cela, la couche de masquage 6 peut être constituée d'un agent soluble. La portion sous la couche de masquage n'étant pas recouverte d'agent d'adhérisation, le matériau injecté n'y adhère donc que mal, et ne risque donc pas de se retrouver entre la couche de masquage et la portion en relief.

La couche de masquage 6 peut être enlevée par d'autres moyens mécaniques, physique et/ou chimique, y compris par pelage. On veillera avantageusement à éviter des moyens abrasifs ou d'autres moyens mécaniques susceptibles de marquer la portion du substrat ou le revêtement du substrat sous les couches de masquage.

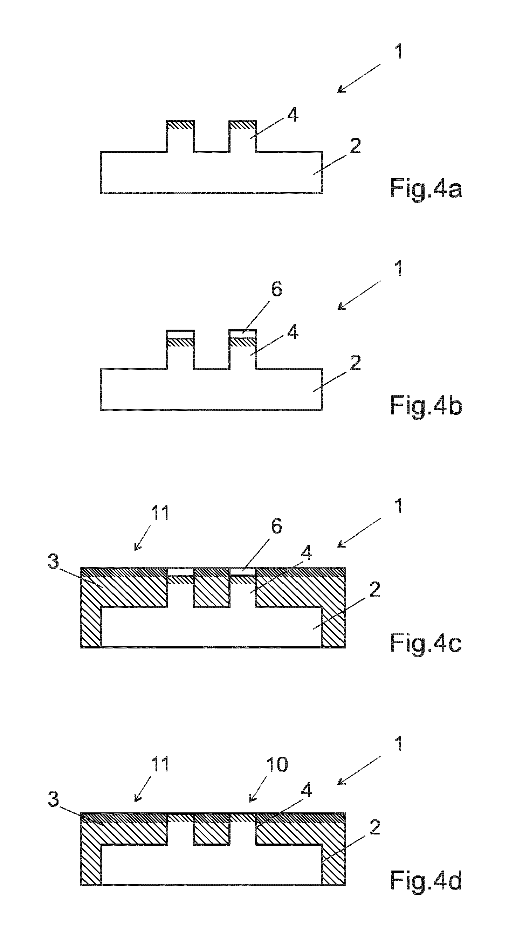

Un des avantages de ce procédé est de permettre un plus large éventail d'options de finition de la pièce mécanique 1. Les figures 4a-4d illustrent des étapes de fabrication d'une pièce mécanique impliquant des étapes de finition.

Le procédé de fabrication de la pièce 1 peut comprendre une étape de préparation du substrat comprenant un ou plusieurs traitement(s) de surface du substrat 2 (figure 4a). En particulier, ces traitements peuvent concerner une surface 10 du relief 4 et comprendre des étapes de finition de type satinage, polissage, ciselage gravure, et/ou déposition de revêtement. Cette étape de finition peut comprendre en outre une opération de décoration.

Le relief 4 est ensuite recouvert par la couche de masquage 6 (figure 4b) et surmouler par injection d'un matériau synthétique.

Après démoulage de la pièce 1, le procédé de fabrication peut comprendre en outre une étape de finition d'une surface 11 du revêtement surmoulé 3 (figure 4c). La surface 10 du relief 4 n'est pas modifiée par ces opérations de traitement de surfaces, étant protégée par la couche 6.

Le procédé de fabrication de la pièce 1 peut se terminer par une étape de dissolution de la couche 6 de manière à rendre directement visible la surface précédemment traitée 10 du relief 4. L'aspect final de la pièce 1 peut être ainsi conféré par une combinaison de différentes opérations de finition appliquées indépendamment sur la surface 10 du relief 4 et sur la surface 11 du revêtement d'élastomère 3.

L'invention concerne aussi des pièces fabriquées avec ce procédé, notamment des pièces d'horlogerie telles que des couronnes de remontoir, des pièces de bijouterie, des pièces de lunetterie ou des parties d'instruments d'écriture.

### Numéros de référence employés sur les figures

- 1 :: pièce mécanique
- 2 :: substrat
- 3 :: élastomère
- 4 :: relief
- 5 :: zone en creux
- 6 :: couche
- 7 :: moule
- 8 :: contre-moule
- 9 :: surface intérieure du moule
- 10 :: surface traitée du substrat
- 11 :: surface traitée du substrat

## Revendications

1. Procédé de fabrication d'une pièce mécanique (1) comportant un substrat (2) et un revêtement d'un matériau synthétique injecté (3) **caractérisé en ce qu'**il comprend les étapes suivantes :
• réaliser sur le dit substrat au moins un relief (4) entouré d'au moins une zone en creux (5) ;
• appliquer sur ledit relief une couche de masquage (6);
• placer ledit substrat dans un moule (7) et/ou dans un contre-moule (8), de manière que la surface de ladite couche de masquage entre en contact physique avec la surface intérieure (9) dudit moule (7) et/ou contre-moule (8);
• injecter un matériau synthétique dans ledit moule (7) et/ou contre-moule (8) de manière à recouvrir au moins une partie de ladite zone en creux (5) d'une couche dudit matériau synthétique (3) ;
• démouler ladite pièce (1) ;
• retirer la couche de masquage (6).

2. Procédé selon la revendication 1, ladite couche de masquage (6) étant retirée en la dissolvant de manière à rendre visible la surface dudit relief (4) sous la couche de masquage; ladite couche étant constituée d'un agent soluble.

3. Procédé selon l'une des revendications 1 à 2, dans lequel ladite étape d'injection d'un matériau synthétique (3) dans ledit moule (7) et/ou contre-moule (8) est suivie d'une opération de vulcanisation dudit matériau synthétique, ladite couche (6) de masquage étant résistante à la vulcanisation.

4. Procédé selon l'une des revendications 1 à 3, comprenant au moins un traitement de surface du substrat effectué avant ledit masquage

5. Procédé selon la revendication 4, dans lequel ladite étape de traitement de surface comprend une étape de finition de type satinage, polissage, ciselage gravure, et/ou déposition de revêtement de surface.

6. Procédé selon la revendication 4, dans lequel ladite étape de traitement de surface comprend une étape de sablage.

7. Procédé selon l'une des revendications 1 à 6, comportant une étape de dépôt d'une couche d'adhérisation par-dessus le substrat et par-dessus ladite couche de masquage (6), ladite couche d'adhérisation permettant de faciliter l'adhérence du matériau injecté sur le substrat.

8. Procédé selon l'une des revendications 1 à 7, comprenant en outre une étape de finition sur une surface dudit matériau injecté (3).

9. Procédé selon l'une des revendications 1 à 8, dans laquelle ledit substrat (2) est réalisé dans un matériau choisi entre l'acier, le laiton, le titane, un métal précieux, le saphir ou la céramique.

10. Procédé selon l'une des revendications 1 à 9, dans laquelle ledit matériau synthétique est un élastomère, par exemple un caoutchouc (3).

11. Procédé selon l'une des revendications 1 à 10, dans laquelle ladite pièce mécanique (1) est une pièce d'horlogerie ou de bijouterie.

12. Pièce mécanique fabriquée selon l'une des revendications précédentes.
